# EUROPÄISCHE PATENTSCHRIFT

(11) **EP 2 314 900 B1**
(45) Veröffentlichungstag und Bekanntmachung des Hinweises auf die Patenterteilung: **24.09.2014**
(21) Anmeldenummer: 10186800.8
(22) Anmeldetag: 07.10.2010
(51) Int. Cl.: F16K 5/04, F16K 5/18

(54) **Ventileinrichtung**
Valve device
DISPOSITIF DE SOUPAPE

(30) Priorität: 20.10.2009 DE 102009049867
(43) Veröffentlichungstag der Anmeldung: 27.04.2011
(73) Patentinhaber: MAHLE International GmbH, 70376 Stuttgart (DE)
(72) Erfinder: Baumann, Michael, 72119 Ammerbuch (DE); Knauß, Rüdiger, 71394 Kernen i.R. (DE); Teubner, Andrea, 73433 Aalen (DE)
(74) Vertreter: BRP Renaud & Partner

(56) Entgegenhaltungen:
- DE-A1- 2 312 714
- DE-A1- 10 304 837
- DE-A1- 19 701 395
- FR-A1- 2 323 078
- US-A- 3 342 453

## Beschreibung

Die vorliegende Erfindung betrifft eine Ventileinrichtung mit einem Gehäuse, in welchem ein Ventilsitz und ein bewegbarer Ventilkörper vorgesehen sind.

Bei Ventileinrichtungen (siehe FR 2 323 078 A1, DE 10 304 837 A1, DE 19 701 395 A1, DE 2 312 714 A1 und US 3 342 453 A1), insbesondere bei Ventileinrichtungen in Kühlmittelpumpen, gibt es zwei wesentliche Aspekte, nämlich zum einen den Bauraumbedarf und zum anderen die Lebensdauer, die für eine Entscheidung für bzw. gegen die jeweilige Ventileinrichtung ausschlaggebend sind. Der Bauraumbedarf ist aufgrund der zunehmend beengten Platzverhältnisse ebenso wichtig wie eine lange Lebensdauer, um hohe Wartungs- bzw. Unterhaltungskosten vermeiden zu können. Bei herkömmlichen Ventileinrichtungen bzw. in der Art von Kugelventilen, reibt dabei ein Ventilkörper ständig an einem Ventilsitz bzw. einer Ventildichtung, was bei einer häufigen Nutzung der Ventileinrichtung nicht zu unterschätzende Verschleißerscheinungen erzeugt.

Die vorliegende Erfindung beschäftigt sich mit dem Problem, eine Ventileinrichtung anzugeben, die insbesondere kompakt baut und eine hohe Lebensdauer aufweist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer Ventileinrichtung, insbesondere bei einer Ventileinrichtung einer Kühlmittelpumpe, in einem Gehäuse der Ventileinrichtung einen Ventilkörper vorzusehen, der sowohl rotatorisch als auch translatorisch verstellbar ist. Prinzipiell ist dabei der Ventilkörper um eine Achse zwischen einer Offenstellung und einer Vorschließstellung verdrehbar, wobei die Verdrehung vorzugsweise kontaktlos zu einer Gehäusewandung und damit reibungsarm und verschleißfrei durchgeführt wird. In seiner Vorschließstellung ist dabei der Ventilkörper fluchtend zu einem Ventilsitz, beispielsweise einer Öffnung in einer Mantelfläche eines zylinderförmigen Gehäuses der Ventileinrichtung angeordnet, liegt jedoch noch nicht dichtend am Ventilsitz an. Zum Überführen des Ventilkörpers von seiner Vorschließstellung in seine Schließstellung wird der Ventilkörper nach Erreichen seiner Vorschließstellung quer zur Drehachse verstellt und auf den Ventilsitz gedrückt. Durch die beschriebene Ausführungsform lassen sich zwei wesentliche Vorteile erreichen: Zum einen wird der Ventilkörper zwischen seiner Offenstellung und seiner Vorschließstellung kontaktfrei bewegt, wodurch ein Verschleiß minimiert und die Lebensdauer der erfindungsgemäßen Ventileinrichtung maximiert werden kann. Zum anderen kann durch die vorgeschlagene Bauweise mit dem Gehäuse und dem darin rotatorisch und translatorisch gelagerten Ventilkörper eine äußerst kompakt bauende Ventileinrichtung erreicht werden, die einen deutlich reduzierten Bauraumbedarf erfordert und daher problemlos insbesondere in ein Gehäuse einer Kühlmittelpumpe eines Kraftfahrzeugs integriert werden kann.

Bei einer vorteilhaften Weiterbildung der erfindungsgemäßen Lösung, ist das Gehäuse zylinderartig ausgebildet und der Ventilkörper weist eine zu einer Innenmantelfläche des Gehäuses komplementäre Form auf, wobei an der Innenmantelfläche des Gehäuses zugleich der Ventilsitz angeordnet ist. Durch die zylinderförmige Ausgestaltung des Gehäuses der Ventileinrichtung lässt sich diese einfach und baurauminimierend beispielsweise in ein Gehäuse einer Kühlmittelpumpe integrieren, wobei zugleich ein Austausch bzw. eine Wartung der erfindungsgemäßen Ventileinrichtung dadurch erleichtert wird, dass diese zum Austausch bzw. zur Wartung einfach entlang der Zylinderachse aus dem Gehäuse der Kühlmittelpumpe herausgezogen bzw. anschließend wieder eingesteckt werden muss.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Komplett- und eine Explosionsdarstellung der erfindungsgemäßen Ventileinrichtung,
- Fig. 2: eine Schnittdarstellung durch die Ventileinrichtung,
- Fig. 3: eine teilweise geschnittene Darstellung eines Ventilkörpers und eines damit verbundenen Stellelementes der Ventileinrichtung,
- Fig. 4a: die Ventileinrichtung in einer Ofifenstellung,
- Fig. 4b: die Ventileinrichtung in einer Schließstellung,
- Fig. 5a bis d: ein Überführen des Ventilkörpers von einer Offenstellung über eine Vorschließstellung in eine Schließstellung,
- Fig. 6: eine Detaildarstellung des Ventilkörpers und einer zugehörigen Sicherheitskontur am Gehäuse der Ventileinrichtung.

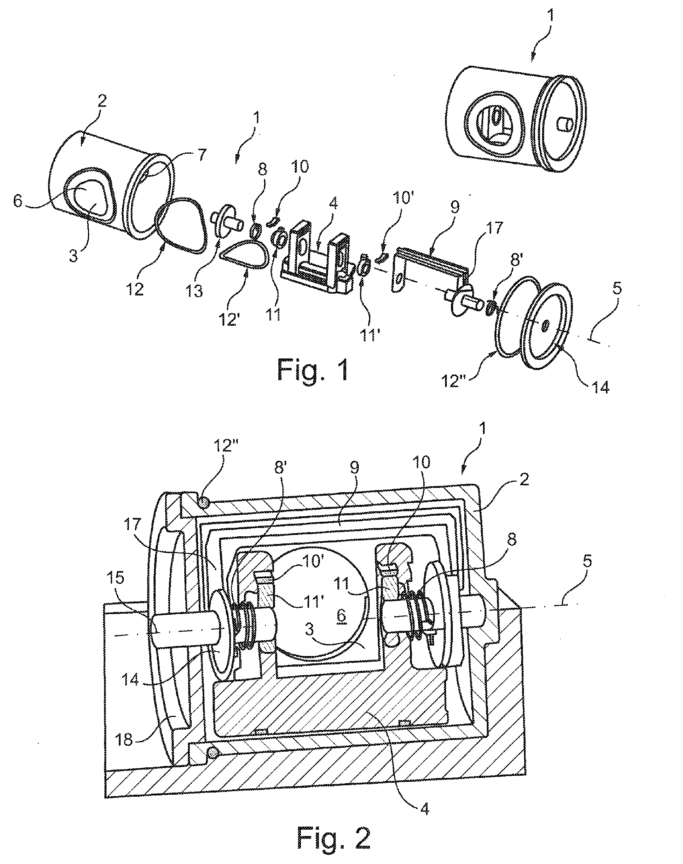

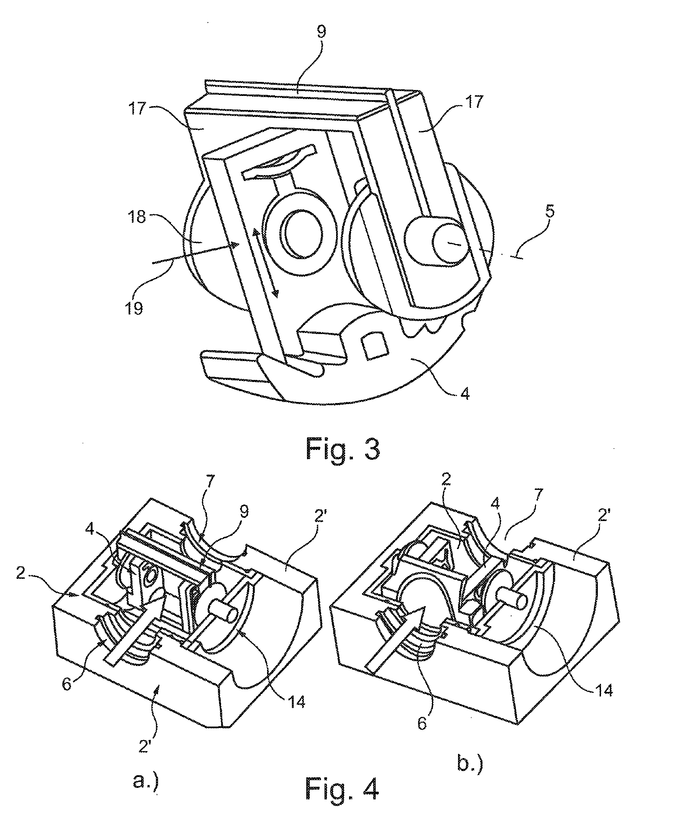

Entsprechend der Fig. 1, weist eine erfindungsgemäße Ventileinrichtung 1 ein Gehäuse 2 auf, in welchem ein Ventilsitz 3 und ein bewegbarer Ventilkörper 4 vorgesehen sind. Der Ventilkörper 4 ist dabei sowohl rotatorisch um eine Achse 5 als auch translatorisch, das heißt quer zur Achse 5 verstellbar. Das Gehäuse 2 ist gemäß den Darstellungen in den Fig. 1 bis 6 zylinderartig ausgebildet, wobei der Ventilkörper 4 eine zu einer Innenmantelfläche des Gehäuses 2 komplementäre Form aufweist und wobei an der Innenmantelfläche des Gehäuses 2 zugleich der Ventilsitz 3 angeordnet ist. Der Ventilsitz 3 ist dabei einem Einlass 6 zugeordnet, dem gegenüberliegend ein Auslass 7 (vgl. insbesondere die Fig. 4a und 4b) zugeordnet ist.

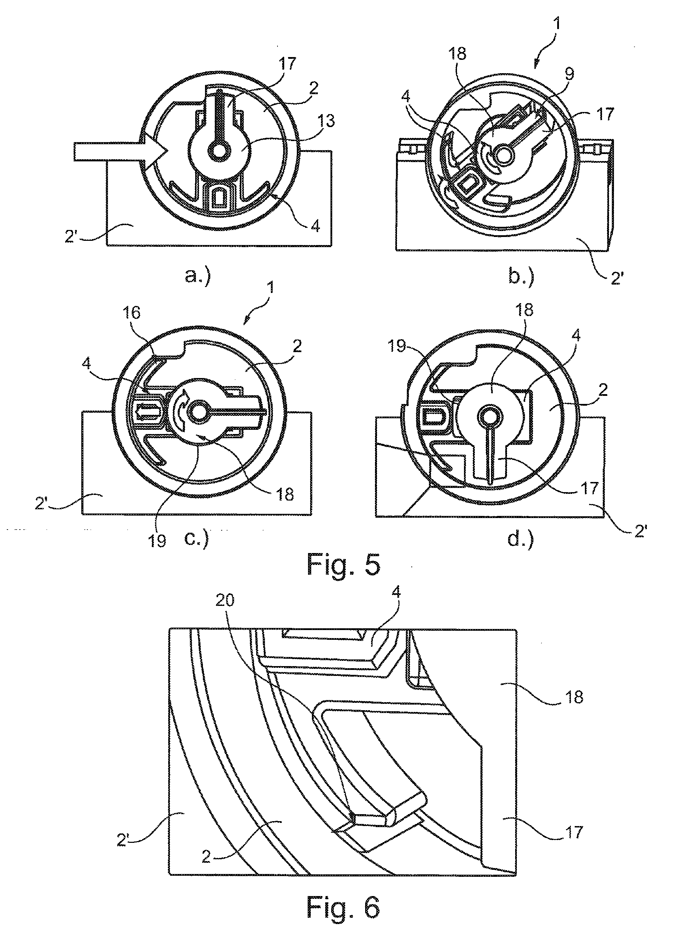

Der Ventilkörper 4 ist darüber hinaus über Schraubenfederelemente 8 und 8' mit einem U-förmigen Stellelement 9 verbunden, das mit einer nicht gezeigten Stelleinrichtung, insbesondere mit einem Stellmotor, antriebsverbunden ist. Darüber hinaus sind zwei Blattfederelemente 10 und 10' vorgesehen, die sich einenends am Ventilkörper 4 und anderenends an zwei Übertragungselementen 11 und 11' abstützen und den Ventilkörper 4 in radialer Richtung, das heißt quer zur Achse 5, in seine Vorschließstellung vorspannen, die insbesondere in der Fig. 5c gezeigt ist. Darüber hinaus sind noch verschiedene Dichtelemente 12, 12' und 12" vorgesehen, ebenso wie ein Lagerelement 13, über welches das Stellelement 9 und der Ventilkörper 4 drehbar am Gehäuse 2 bzw. einer Stirnplatte 14 gelagert sind.

Betrachtet man die Fig. 2, so ist die Stirnplatte 14 als stirnseitiger Abschluss der Ventileinrichtung 1 deutlich zu erkennen, wobei ein Antriebsfortsatz 15 des Stellelementes 9 die Stirnplatte 14 durchdringt und beispielsweise mit einer nicht gezeigten Antriebseinrichtung antriebsverbunden sein kann.

Entsprechend den Fig. 5a bis 5d, ist ein Überführen des Ventilkörpers 4 von seiner gemäß der Fig. 5a gezeigten Offenstellung in die gemäß der Fig. 5d gezeigte Schließstellung dargestellt. Gemäß der Fig. 5a befindet sich somit der Ventilkörper 4 in seiner Offenstellung, in welcher weder dieser noch das Stellelement 9 in einen Strömungsquerschnitt zwischen Einlass 6 und Auslass 7 hineinragen. In dieser Stellung ist der Ventilkörper 4 zumindest geringfügig zur Innenmantelfläche des Gehäuses 2 beabstandet und tritt somit in dieser Stellung nicht mit der Innenmantelfläche des Gehäuses 2 in Kontakt. Gemäß der Fig. 5b wird nun der Ventilkörper 4 kontaktlos und damit reibungsfrei bzw. zumindest reibungsarm mit dem Stellelement 9 um die Achse 5 verdreht, bis der Ventilkörper 4 gemäß der Fig. 5c seine Vorschließstellung erreicht hat. In dieser Vorschließstellung ist der Ventilkörper 4 fluchtend zum Ventilsitz 3, das heißt fluchtend zum Einlass 6 angeordnet, liegt aber noch nicht dichtend am Ventilsitz 3 an. Die Vorschließstellung ist erreicht, sofern der Ventilkörper 4 an einem Anschlag 16 am Gehäuse 2 anliegt und dadurch ein weiteres Verdrehen des Ventilkörpers 4 verhindert wird. In dieser Vorschließstellung liegt der Ventilkörper 4 jedoch - wie weiter oben bereits beschrieben - noch nicht dichtend am Ventilsitz 3 an, so dass er zunächst noch in Radialrichtung auf den Ventilsitz 3 gedrückt werden muss. Dies erfolgt gemäß den Fig. 5c und 5d durch eine Relativverdrehung des Stellelementes 9 relativ zum Ventilkörper 4. An einem U-Schenkel 17 des Stellelementes 9 ist dabei eine kreisförmige Stellkontur 18 mit einer Exzentrizität 19 vorgesehen, wobei diese Exzentrizität 19 bei einer Relativverdrehung des Stellelementes 9 relativ zum Ventilkörper 4 den Ventilkörper 4 gegen den Ventilsitz 3 vorspannt und gleichzeitig den Ventilkörper 4 in seiner Schließstellung (vgl. Fig. 5d) verriegelt.

Ein Öffnen der Ventileinrichtung 1 erfolgt dabei beginnend mit der Fig. 5d zunächst durch eine Verdrehung des Stellelementes 9 relativ zum Ventilkörper 4, was zu einem Verdrehen der Exzentrizität 19 führt, die dann in dem gemäß der Fig. 5c gezeigten Zustand nicht mehr mit dem Ventilkörper 4 in Wirkverbindung steht. In der gemäß der Fig. 5c gezeigten Darstellung bewirken nun die beiden Blattfederelemente 10 und 10' eine Verschiebung des Ventilkörpers 4 radial zur Achse 5, so dass sich der Ventilkörper 4 nach innen vom Ventilsitz 3 löst. Anschließend kann der Ventilkörper 4 zusammen mit dem Stellelement 9 um die Achse 5 reibungsfrei über die Stellung gemäß der Fig. 5b in die Offenstellung gemäß der Fig. 5a verstellt werden. Vorteilhafterweise ist dabei die Ventileinrichtung 1 als vorgefertigte Baugruppe ausgebildet und dadurch einfach in ein Gehäuse 2' (vgl. die Fig. 2, 4 und 5) beispielsweise einer Pumpe, insbesondere einer Kühlmittelpumpe, einer Hydraulikpumpe, einer Kraft- oder einer Schmierstoffpumpe einzusetzen.

Gemäß der Fig. 6 ist noch eine Sicherungskontur 20 gezeigt, welche den Ventilkörper 4 in seiner Schließstellung gegen eine unbeabsichtigte Drehbewegung sichert. Diese Sicherungskontur 20 kann dabei beispielsweise in das Gehäuse 2 integriert sein.

Mit der erfindungsgemäßen Ventileinrichtung 1, lässt sich somit eine äußerst kompakte Bauweise erreichen, wobei die erfindungsgemäße Ventileinrichtung 1 zugleich eine lange Lebensdauer aufweist, da der Ventilkörper 4 zumindest von der Offenstellung in die Vorschließstellung reibungsfrei geführt wird. Der Ventilkörper 4 kann in diesem Fall beispielsweise aus Kunststoff oder aus Metall ausgebildet sein, ebenso wie die anderen Komponenten der Ventileinrichtung 1, beispielsweise das Gehäuse 2.

## Patentansprüche

1. Ventileinrichtung (1) mit einem Gehäuse (2), in welchem ein Ventilsitz (3) und ein bewegbarer Ventilkörper (4) vorgesehen sind, wobei
- der Ventilkörper (4) um eine Achse (5) drehbar gelagert ist und zumindest reibungsarm zwischen einer Vorschließstellung und einer Offenstellung verdrehbar ist,
- der Ventilkörper (4) in seiner Vorschließstellung fluchtend zum Ventilsitz (3) aber noch nicht dichtend am Ventilsitz (3) angeordnet ist,
- wobei der Ventilkörper (4) radial zur Achse (5) verstellbar ist,
- wobei der Ventilkörper (4) zum Überführen von der Vorschließstellung in eine Schließstellung radial zur Achse (5) auf den Ventilsitz (3) verstellt ist,
**dadurch gekennzeichnet,**
**dass** zwei Blattfederelemente (10,10') vorgesehen sind, die sich einenends an Übertragungselementen (11,11') und anderenends am Ventilkörper (4) abstützen und den Ventilkörper (4) in radialer Richtung in seine Vorschließstellung vorspannen.

2. Ventileinrichtung nach Anspruch 1,
**dadurch gekennzeichnet,**
**dass** das Gehäuse (2) zylinderartig ausgebildet ist und der Ventilkörper (4) eine zu einer Innenmantelfläche des Gehäuses (2) komplementäre Form aufweist, wobei an der Innenmantelfläche zugleich der Ventilsitz (3) angeordnet ist.

3. Ventileinrichtung nach Anspruch 1 oder 2,
**dadurch gekennzeichnet,**
**dass** der Ventilkörper (4) über Schraubenfederelemente (8,8') mit einem u-förmigen Stellelement (9) verbunden ist, welches mit einer Stelleinrichtung, insbesondere einem Stellmotor, antriebsverbunden ist.

4. Ventileinrichtung nach einem der Ansprüche 1 bis 3,
**dadurch gekennzeichnet,**
**dass** im Gehäuse (2) zumindest ein Anschlag (16) vorgesehen ist, an welchem der Ventilkörper (4) nach Erreichen seiner Vorschließstellung anliegt.

5. Ventileinrichtung nach einem der Ansprüche 3 oder 4,
**dadurch gekennzeichnet,**
**dass** an einem U-Schenkel (17) des Stellelements (19) eine kreisförmige Stellkontur (18) mit einer Exzentrizität (19) vorgesehen ist, wobei die Exzentrizität (19) den Ventilkörper (4) in seiner Schließstellung verriegelt und gegen den Ventilsitz (3) vorspannt.

6. Ventileinrichtung nach einem der Ansprüche 3 bis 5,
**dadurch gekennzeichnet,**
**dass** das Gehäuse (2) einen Einlass (6) und einen Auslass (7) aufweist, wobei im Bereich des Einlasses (6) der Ventilsitz (3) angeordnet ist.

7. Ventileinrichtung nach einem der Ansprüche 3 bis 6,
**dadurch gekennzeichnet,**
**dass** weder der Ventilkörper (4) noch das Stellelement (9) in der Offenstellung der Ventileinrichtung (1) in einen Strömungsquerschnitt hineinragen.

8. Ventileinrichtung nach einem der Ansprüche 1 bis 7,
**dadurch gekennzeichnet,**
**dass** die Ventileinrichtung (1) als vorgefertigte Baugruppe ausgebildet ist.

9. Pumpe, insbesondere eine Kühlmittelpumpe, eine Hydraulikpumpe, eine Kraft- oder eine Schmierstoffpumpe, mit einer Ventileinrichtung (1) nach einem der Ansprüche 1 bis 8, wobei die Ventileinrichtung (1) insbesondere in ein Gehäuse (2') der Pumpe integriert ist.

## Claims

1. A valve device (1) with a housing (2), in which a valve seat (3) and a movable valve body (4) are provided, wherein
- the valve body (4) is rotatably mounted about an axis (5) and is rotatable at least in a low-friction manner between a pre-closed position and an open position,
- the valve body (4) in its pre-closed position is arranged aligned to the valve seat (3) but not yet in a sealing manner against the valve seat (3),
- wherein the valve body (4) is dispaceable radially to the axis (5),
- wherein for transferring from the pre-closed position into a closed position, the valve body (4) is displaced radially to the axis (5) onto the valve seat (3),
**characterized in that**
two flat spring elements (10, 10') are provided, which rest at one end on transfer elements (11, 11') and at the other end on the valve body (4) and prestress the valve body (4) in radial direction into its pre-closed position.

2. The valve device according to Claim 1, **characterized in that** the housing (2) is constructed in the manner of a cylinder, and the valve body (4) has a shape complementary to an inner surface area of the housing (2), wherein the valve seat (3) is arranged, at the same time, on the inner surface area.

3. The valve device according to Claim 1 or 2, **characterized in that** the valve body (4) is connected by means of helical spring elements (8, 8') with a u-shaped positioning element (9), which is in drive connection with a positioning device, in particular a servomotor.

4. The valve device according to one of Claims 1 to 3, **characterized in that** in the housing (2) at least one stop (16) is provided, against which the valve body (4) lies after reaching its pre-closed position.

5. The valve device according to one of Claims 3 or 4, **characterized in that** a circular positioning contour (18) with an eccentricity (19) is provided on a U-arm (17) of the positioning element (19), wherein the eccentricity (19) locks the valve body (4) in its closed position and prestresses it against the valve seat (3).

6. The valve device according to one of Claims 3 to 5, **characterized in that** the housing (2) has an inlet (6) and an outlet (7), wherein the valve seat (3) is arranged in the region of the inlet (6).

7. The valve device according to one of Claims 3 to 6, **characterized in that** neither the valve body (4) nor the positioning element (9) in the open position of the valve device (1) project into a flow cross-section.

8. The valve device according to one of Claims 1 to 7, **characterized in that** the valve device (1) is constructed as a prefabricated assembly.

9. A pump, in particular a coolant pump, a hydraulic pump, a fuel pump or a lubricant pump, with a valve device (1) according to one of Claims 1 to 8, wherein the valve device (1) is in particular integrated into a housing (2') of the pump.

## Revendications

1. Dispositif de soupape (1) comportant un logement (2), dans lequel un siège de soupape (3) et un corps de soupape mobile (4) sont prévus, dans lequel :
- le corps de soupape (4) est positionné rotativement autour d'un axe (5) et peut être tourné avec faible friction entre une position de préfermeture et une position d'ouverture,
- le corps de soupape (4) est disposé dans sa position de préfermeture en alignement avec le siège de soupape (3) mais pas encore de manière étanche sur le siège de soupape (3),
- dans lequel le corps de soupape (4) est réglable radialement par rapport à l'axe (5),
- dans lequel le corps de soupape (4) est réglé afin de passer de la position de préfermeture à une position de fermeture radialement par rapport à l'axe (5) sur le siège de soupape (3),
**caractérisé en ce que** deux éléments de ressort à lame (10, 10') sont prévus, qui s'appuient à une extrémité sur des éléments de transmission (11, 11') et à une autre extrémité sur le corps de soupape (4) et contraignent le corps de soupape (4) dans la direction radiale dans sa position de préfermeture.

2. Dispositif de soupape selon la revendication 1, **caractérisé en ce que** le logement (2) est conçu en forme de cylindre et le corps de soupape (4) présente une forme complémentaire par rapport à une surface de gaine intérieure du logement (2), dans lequel sur la surface de gaine intérieure le siège de soupape (3) est simultanément disposé.

3. Dispositif de soupape selon la revendication 1 ou 2, **caractérisé en ce que** le corps de soupape (4) est relié par l'intermédiaire d'éléments de ressort à boudin (8, 8') à un élément de réglage en forme de U (9), qui est relié en entraînement avec un dispositif de réglage, notamment un servomoteur.

4. Dispositif de soupape selon une des revendications 1 à 3, **caractérisé en ce que** dans le logement (2) au moins une butée (16) est prévue, sur laquelle le corps de soupape (4) vient reposer après avoir atteint sa position de préfermeture.

5. Dispositif de soupape selon une des revendications 3 ou 4, **caractérisé en ce que** sur un pan en U (17) de l'élément de réglage (19) un contour de réglage (18) circulaire avec une excentricité (19) est prévu, dans lequel l'excentricité (19) verrouille le corps de soupape (4) dans sa position de fermeture et le contraint contre le siège de soupape (3).

6. Dispositif de soupape selon une des revendications 3 à 5, **caractérisé en ce que** le logement (2) présente une admission (6) et un échappement (7), dans lequel le siège de soupape (3) est disposé au niveau de l'admission (6).

7. Dispositif de soupape selon une des revendications 3 à 6, **caractérisé en ce que** ni le corps de soupape (4) ni l'élément de réglage (9) ne dépassent dans une section transversale d'écoulement dans la position ouverte du dispositif de soupape (1).

8. Dispositif de soupape selon une des revendications 1 à 7, caractérisé e ce que le dispositif de soupape (1) est conçu comme un module préfabriqué.

9. Pompe, notamment pompe de fluide de refroidissement, pompe hydraulique, pompe à carburant ou à lubrifiant, comportant un dispositif de soupape (1) selon une des revendications 1 à 8, dans lequel le dispositif de soupape (1) est intégré notamment dans un logement (2') de la pompe.
